# EUROPEAN PATENT APPLICATION

(11) **EP 4 574 422 A1**
(43) Date of publication of application: **25.06.2025**
(21) Application number: 23217445.8
(22) Date of filing: 18.12.2023
(51) Int. Cl.: B32B 17/10

(54) **INTERLAYER FILMS FOR LIDAR APPLICATIONS**

(71) Applicant: Kuraray Europe GmbH, 65795 Hattersheim (DE)
(72) Inventor: Keller, Uwe, 77210 Avon (FR); Mummy, Florian, 60325 Frankfurt am Main (DE); Wolpers, Arne, 50935 (DE)
(74) Representative: Janßen, Christian Oliver

(57) **Abstract**

The invention is directed to interlayer films suitable for LIDAR applications in windshields.

## Description

The invention is directed to interlayer films suitable for LIDAR applications.

Laminated glazing is long known in various applications, especially for glazing in all kinds of vehicles (cars, trucks, etc.). Modern vehicles (i.e. their windshields) are often equipped with sensors which detect, for example, raindrops on the windscreen by absorbing water in the NIR range, thus allowing automatic control of the windscreen wiper function.

More importantly, autonomous vehicles may use LIDAR (light detection and ranging) systems for obstacle detection and avoidance to navigate safely through environments, using scanning laser beams. LIDAR systems generally work in the NIR or SWIR range, for example at wavelengths of close to 900, 1350, 1550 nm and so on.

What these systems have in common is that the windshield and thus, also the PVB film embedded therein, must be as transparent as possible for radiation in the IR or NIR range. Attenuation or reflection of NIR or IR radiation by absorption in the PVB film considerably impairs the function of such sensors and would constitute a severe safety hazard. On the other hand, light transmission for radiation in the visible range and haze should be as low as possible.

It is known for such applications to utilize interlayer films with coatings or dyes having absorption properties in theses ranges. One prominent class of compounds having the necessary features are perylenes as disclosed in WO2021233807, DE102008000685 or WO2022063962.

However, besides the absorption characteristics, it is essential that the compounds are homogenously mixed with the material of the interlayer film without aggregating into particles that may scatter the light. Such films usually comprise polyvinyl acetal like PVB, one or more plasticizers, anti-adhesion salts, UV-absorber and anti-oxidation compounds. The known dyes used in LIDAR applications tend to agglomerate in such matrices resulting in scattering of the NIR light.

It has been found that some dyes have not only the necessary absorption characteristics, but can also be homogenously distributed in a PVB matrix without visible agglomerations. It was further found that the known interlayer films for laminated glazings can be easily provided with LIDAR features when the dyes are provided in films having no or a low amount of plasticizer.

Accordingly, object of the invention is a film comprising a first polyvinyl acetal and 0 - 20 wght%, preferably 0 to 5 wght% of a first plasticizer and 0.1 - 20 % by weight of a radiation absorber **characterized in that** the film has more than 80% transmission for radiation with a wavelength of 905 nm, a haze of less than 5% and a transmission for radiation with a wavelength of 380-780 nm of less than 20%.

Preferable, the radiation absorber does not bleed out of the film after storage of one week at 100 °C against a film comprising a second polyvinyl acetal and 10 - 40 wght% of a second plasticizer more than 0.5 mm. A more precise description of the test conditions can be found in the examples.

The radiation absorber may be provided as coating on at least one surface of the film and/or can be provided homogenously distributed in the bulk of the film.

Suitable radiation absorber can have formula I 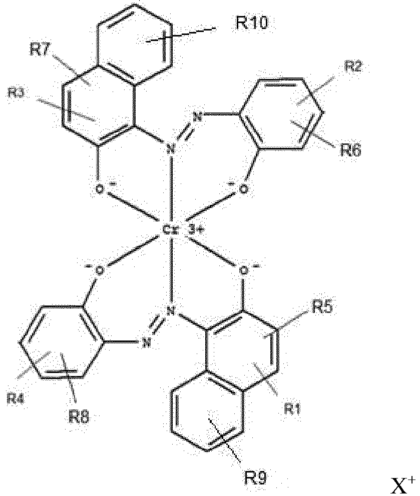 with
R1, R2, R3, R4 = same or different: H, alkyl residue with 1 to 15 carbon atoms, hydroxy alkyl residue with 1 to 15 carbon atoms, oligoglycol residue 1-10 glycol units, alkoxy residue with 1 to 15 carbon atoms
R5, R6, R7, R8, R9, R10 = same or different: H, NO₂, SO₃, F, Cl, Br, OH
X⁺ as counterion: H⁺, NH⁴⁺, NR⁴⁺, Na⁺, K⁺, Mg²⁺, Ca^{2+,}

More specific, the radiation absorber may be compound according to CAS 12237-22-8 or CAS 72812-34-1. Such compounds are commercially available under the following tradenames: Polysynthren Black H, Black J 93, Zapon Black X 51, Savinyl Black NS, Solvent Black 27, Neopen Black X 53, Neozapon Black RE, Neozapon Black X 51, Vali Fast Black 3820, Vali Fast Black 3840, Oleosol Fast Black RL, C.I. Solvent Black 27, Duasyn Black A-IG-VP 280, Duasyn Black A-RG-VP 280, Solvent Black 27:OIL BLACK RL, Solvent Black NS (Solvent Black 27), C.I. Solvent Black 27.

### Method of manufacture the first film

Another object of the invention is a method for producing a film as disclosed by dissolving the radiation absorber and the first polyvinyl acetal in an organic solvent to obtain a mixture (as solution or suspension), casting the mixture on a surface and evaporating the organic solvent to provide the film. Evaporating the organic solvent may be performed under elevated temperature and/or reduced pressure. In any case the resulting film should have a smooth surface without voids or wrinkles.

Suitable organic solvents are methanol, ethanol, ethyl acetate, methyl acetate, methyl ethyl ketone, tetrahydrofurane, toluene or mixtures thereof. It should be noted that in the scope of this invention, organic solvents are not regarded as plasticizers as defined later. For example, organic solvents as used in the method of the invention may have a boiling point less than 100 °C.

In a preferred variant, the surface is provided by a polymeric film like PET. The polymeric film can further be used as transfer film to apply the film of the invention onto other substrates as disclosed later.

### Laminated glass

Since the films according to the invention have a very low bleed-out of the dye, they can advantageously be used in combination with well-known interlayer films to manufacture laminated glazing.

Accordingly, another object of the invention is laminated glass comprising two sheets of glass sandwiching an interlayer film comprising at least one first film according to any of the claims and at least one second film comprising a second polyvinyl acetal and 20 - 40 wght% of a second plasticizer and wherein the second film comprises no radiation absorber.

In this laminated glass, the first film may have the same surface area as the second film, but preferable has a smaller surface area as the second film. Furthermore, the laminated glass may contain one or more sheets of the first film applied to different positions. For example, if the laminated glass is used as windshield in cars, one sheet may be positioned at the upper left side of the windscreen and/or at the upper right side to protect a several LIDAR sensors. Preferable, the second film comprises at least one UV absorber. This feature is known to the person skilled in the art to protect the final laminated glazing from deterioration by UV radiation in sunlight, resulting in undesired yellowing of the glazing. Accordingly, a person skilled in the art is well aware of compounds suitable as UV absorber. However, since the radiation absorbers used for the first film may also deteriorate under UV radiation, it is preferred that the Laminated glass has a first surface facing towards sunlight a second surface facing away from sunlight and wherein the second film is positioned between the first surface and the first film. Preferably, the second film has a light transmission at 400 nm of less than 50%, less than 30%, less than 15%, less than 10%, less than 5%, less than 3% or less than 1% when measured according ISO 13837 (2008) for 0.76 mm layer thickness in a laminated glass between 2 plies of 2 mm clear glass.

### First film

Preferably, the amount of plasticiser in the first film is less than 15 wght%, more preferably less than 10 wght%, more preferably less than 5 wght% and most preferably less than 2 wght%. Most preferred, the first film does not contain a plasticizer (0 wght%).

If used in combination with a second film, the amount of plasticiser in the first film is measured prior to combination with the second film. Hereinafter, the term "prior to combination" refers to the state of the first and second film prior to having any contact to each other. For example, the term refers to the composition of each film separately formed and separately wound to individual rolls. The term "prior to combination" refers to the state of the layers or films before combining them either in the lamination process of the laminated glass or prior to building a stack from the layers used for lamination.

The first film is produced separately from the second film (which is usually extruded) and has either no plasticiser at all or sufficiently small proportion of plasticiser so that subsequent functionalization and processing is not adversely influenced. The thickness of the first film is preferable 10 - 250 µm, more preferably 15 - 100 µm, most preferably 20 - 50 µm.

In addition to comprising the radiation absorber, portions of the first film can be modified for a reduced transparency without transparency for the LIDAR wavelengths by printing, coating or bulk tinting. Dyes for this purpose are known to the person skilled in the art and may contain inorganic or organic pigments, which preferably not dissolve in the polymer matrix and thus resist migration from second to first film (and vice versa).

Generally, all known pigments for coloration, obscuration, reflection, absorption can be used. In the case of black pigments, preferable carbon black, iron oxides, polyaniline, perylenes or spinel pigments are used. In the case of white pigments, the modifications of titanium dioxide, barium sulfate or other can be used. In case of blue and green, derivatives of phthalocyanines can be used. In case of red, quinacridones, diketopyrrolopyrrols are typical candidates as there are azo pigments for yellow. In addition, light diffusing, light guiding, heat absorbing or reflecting particles or fibers may be used. The pigments may be dispersed in a carrier fluid like water, alcohol or mixtures of alcohol and water. Furthermore, binders like polyvinyl alcohol, polyvinyl butyral, polyvinyl pyrrolidone, polyacrylates, polyurethanes or poly styrene-acrylate may be present. Such printing compositions are referred to as "printing inks" or simple "inks" hereinafter. Also, the first film comprising the radiation absorber may be combined with another film without radiation absorber but otherwise having the properties and a reduced transparency as described above for the first film.

### Second film

The second film may be any plasticized PVB-film known in the art. It is further possible the second film comprises two (or more) films having the same of a different composition.

The second film has in the starting state prior to combination with the first film at least 16 wght% or 22 wght%, such as 22.0 - 45.0 wght%, preferably 25.0 - 32.0 wght% and in particular 26.0 - 30.0 wght% plasticiser.

The thickness of the second film in the starting state prior to combination with L1 is 300 - 2500 µm, preferably 400 - 1000 µm, preferably 600 - 900 µm.

### Polyvinyl Acetal

The first and second film used in accordance with the invention contain a first and second polyvinyl acetal resin, which may have an identical or a different chemical composition. Both are produced by acetalisation of polyvinyl alcohol or ethylene vinyl alcohol copolymer. Most preferred polyvinyl butyral is used as polyvinyl acetal.

The first and second polyvinyl acetals may differ in a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the first and second film may be identical or different, pure or a mixture of polyvinyl alcohols or ethylene vinyl alcohol copolymers with different degree of polymerisation or degree of hydrolysis.

The polyvinyl acetate content of the polyvinyl acetals in the first and second film can be set by use of a polyvinyl alcohol or ethylene vinyl alcohol copolymer saponified to an appropriate degree. It is also possible to carry out the acetalisation of the polyvinyl alcohols or ethylene vinyl alcohol copolymers with a mixture of a number of aldehydes or keto compounds.

The first and second film preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in the first and second film may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

Independent of each other the polyvinyl alcohol content of the polyvinyl acetals PB used in first and second film may be between 14 - 26 % by weight, 16 - 24 % by weight, 17 - 23 % by weight and preferably between 18 and 21 % by weight.

In a preferred embodiment of the invention, the first film comprises a polyvinyl acetal PA with a proportion of vinyl alcohol groups from 6 to 26 % by weight and the second film comprises a polyvinyl acetal B with a proportion of vinyl alcohol groups from 14 to 26 % by weight.

The first and second film may contain uncross-linked polyvinyl acetal, but the use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

The second film and optionally the first film used in accordance with the invention may contain identical or different plasticisers. Preferable, one or more plasticizers selected from the following groups are used:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

The second film may consist of at least two sub-films B' and B", which have a different plasticiser content.

In addition, the first and second film may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface-active substances.

It is further possible that the final interlayer film is provided with a curved shape parallel to the shape of a windscreen by asymmetric stretching.

Generally, the first and second film are combined with each other optionally using a transfer film as disclosed. Subsequently, the windshields are produced by a lamination process known in the art utilizing the combined films. Examples of the lamination process as well as the techniques to apply the areas with reduced transparency to layer L2 are also known in the art and can be found inter alia in WO 2019/121535 and WO 2019/038043.

### Examples

### Example 1 and 2

10% ethanolic solutions of a polyvinyl butyral having a content of PVOH of 19.3 wght%, a residual acetate content of 1.0 wght% and a viscosity of 80 mPas for its 5% ethanolic solution) were prepared by stirring and heating at 45 °C. After confirming complete dissolution, Polysynthren Black H obtained from Clariant was added in an amount to result in 2.5 weight-% (Ex. 1) respective 5% weight-% (Ex. 2) for the dried film. The solutions were stirred for 2h at 45 °C to allow complete solution of the die. A4 size sheets of 75 µm matte PET with high roughness (Hostaphan^{®} MT) were coated with above coating compositions to give dry thicknesses of 25 µm after complete removal of the solvent in an drying oven at 45 °C. The matte PET carrier was carefully peeled away to obtain the respective thin free-standing thin PVB. The PVB bottom side had a Rz roughness close to 3.0 µm.

### Comparative example 3

A 18% ethanolic solutions of polyvinyl acetal Mowital^{®} B60H was prepared by stirring and heating at 45 °C. After confirming complete dissolution, finely ground Paliogen Black L0086 pigment obtained from BASF was added in an amount to result in 2.5 weight-% for the dried film. For complete dispersion, the solutions was mixed for 30 min at 5000 Rpm with a Dispermat stirring device using a dissolver disk. An A4 size sheet of 75 µm matte PET with high roughness (Hostaphan^{®} MT) was coated with above coating composition to give dry thicknesses of 25 µm after complete removal of the solvent in an drying oven at 45 °C. The matte PET carrier was carefully peeled away to obtain the thin free-standing thin PVB. The PVB bottom side had a Rz roughness close to 3.0 µm.

### Comparative example 4

A A4 sample of commercially available plasticizer free PVB thin film in 50 µm thickness (Mowital^{®} LP BF 050) was coated with an aqueous ink composition based on a PU binder containing 10% of finely ground Lumogen Black K0087 pigment, obtained from BASF. After drying, the ink layer measured 5 µm and the pigment concentration in the ink layer was approximately 20%.

Laminated glasses were prepared by sandwiching the 25 µm dark tinted thin PVB film of example 1-2, comparative example 3 and 50 µm coated thin film of comparative example 4 with regular clear sheet of Trosifol^{®} V200 0.76 mm between 2 plies of 2mm ultra clear glass (Optiwhite^{®} from NSG). The lamination was achieved by applying a standard pre-lamination step and 90 minute autoclave treatment at 12 bar max. and 140 °C max. For comparison, another laminated glass was prepared using Trosifol^{®} V200 0.76 mm as the sole interlayer.

The laminated glasses were cut down to ca. 5x5 cm size to perform the measurements.
- Haze was measured on a Colorquest XE according to ASTM 1003.
- UV transmission was measured on a Perkin Elmer Lambda 950 according ISO 13837 (300 - 400 nm)
- Visible light transmission TL was measured on a Perkin Elmer Lambda 950 according to EN410.
- Spectral transmission data was recorded on a Perkin Elmer Lambda 950 for a range of 300 - 2500 nm according to ISO 13837.
- Xenon exposure was using Q-Sun Xe-3-HBS with Daylight-Q-Filter at an air temperature of 50 °C and 90 °C for the black standard.

### Method to measure the bleed-out

10 x 10 cm rectangles were cut from the NIR transparent, dark tinted thin PVB film and placed in the center of a first 30 x 30 cm 2mm clear glass sheet. A 30 x 30 cm regular clear sheet of Trosifol^{®} V200 0.76 mm (conditioned to 0.5% sheet moisture) was placed on the dark rectangle and the assemblies were completed with a second glass sheet. The laminated glasses were produced following the standard procedure using 140°C as the hold temperature of the autoclave step.

The edges of the black rectangle laminated are inspected against a white background a first time with the help of a loupe for any bleed-out of die. Bleed-out length is considered the distance, any tinted component in the die or the die itself has laterally diffused into the initially clear PVB area from an initially straight and well-defined edge of the black rectangle. A bleed-out length of less than 0.5 mm is considered sufficient, bleed-out lengths of less than 0.25 mm are preferred, bleed-out lengths of less than 0.1 mm are more preferred and bleed-out length of 0 mm are most preferred.

The laminated glass is subject to 1 week heat storage a 100°C in an oven and the edges of the black rectangle are inspected a second time for any bleed-out.

A bleed-out length of less than 0.5 mm is considered sufficient, bleed-out lengths of less than 0.25 mm are preferred, bleed-out lengths of less than 0.1 mm are more preferred and bleed-out length of 0 mm are most preferred.

| | Ex. 1 | Ex. 2 | Comp. Ex 3 | Comp. Ex. 4 | V200 0.76 |
|---|---|---|---|---|---|
| NIR transparent black dye / pigment | Polysynthren Black H | Polysynthren Black H | Paliogen Black L0086 | Paliogen Black K0087 | n.a. |
| Concentration of dye / pigment | 2.5% | 5% | 3% | 10% (in ink layer) | n.a. |
| % Haze | 0.0 | 0.1 | 26 | 35 | 0.2 |
| % TL | 4.3 | 0.3 | 21 | 13 | 91 |
| % TUV | 0 | 0 | 0 | 0 | 2.6 |
| % Transmission @ 905 nm | 87 | 84 | 73 | 65 | n.a. |
| % Transmission @ 1360 nm | 86 | 86 | 78 | 74 | n.a. |
| TL after 4500h Xenon Test (thin film facing lamps) | 61.3 | 2.6 | n.a. | n.a. | n.a. |
| TL after 4500h Xenon Test (V200 facing lamps) | 15.8 | 1.2 | n.a. | n.a. | n.a. |
| Bleed out length after 100h heat storage (mm) | 0.0 | 0.0 | 0.0 | 0.1 | n.a. |

It was found, that despite the good solubility of Polysynthren Black H, which is characteristic for a normal dye, its tendency for migration into an adjacent plasticizer rich PVB layer is surprisingly low as observed by the bleed-out test. At the same time the good solubility allows for a much better dispersion in a PVB layer during a film manufacturing process as compared to the more pigment-like absorbers used in the comparative examples, despite that for the latter, efforts were made to help dispersion by high speed mixing or an additional grinding step in case of the ink formulation.

The good solubility of the radiation absorbers according the invention allows for exceptional low haze which in turn strongly benefits the transmission of any LIDAR radiation without optical loss due to scattering effects. Moreover, the low migration enables a more stable laminate configurations when combining the first film with radiation absorber with thicker PVB that contains an UV-absorbing additive. This becomes obvious from the reduced bleaching in a Xenon test, when the first film is positioned behind and thus protected by the thicker PVB (second film). Would there be significant migration into the plasticizer-rich thick layer, the radiation absorber would eventually migrate near the first surface directly facing the sun (or xenon) -light) where less or no UV protection is available by the second film.

## Claims

1. Film comprising a first polyvinyl acetal and 0 - 20 wght% of a first plasticizer and 0.1 - 20 % by weight of a radiation absorber **characterized in that** the film has more than 80% transmission for radiation with a wavelength of 905 nm measured according to the method in the description, a haze of less than 5% and a transmission for radiation with a wavelength of 380-780 nm of less than 20%.

2. Film according to claim 1 **characterized in that** the radiation absorber does not bleed out of the film after storage of one week at 100 °C against a film comprising a second polyvinyl acetal and 10 - 40 wght% of a second plasticizer more than 0.5 mm.

3. Film according to claim 1 or 2 **characterized in that** the radiation absorber is provided as coating on at least one surface of the film.

4. Film according to claim 1 or 2 **characterized in that** the radiation absorber is provided homogenously distributed in the bulk of the film.

5. Film according to any of the claims 1 to 4 **characterized in that** the radiation absorber has formula I 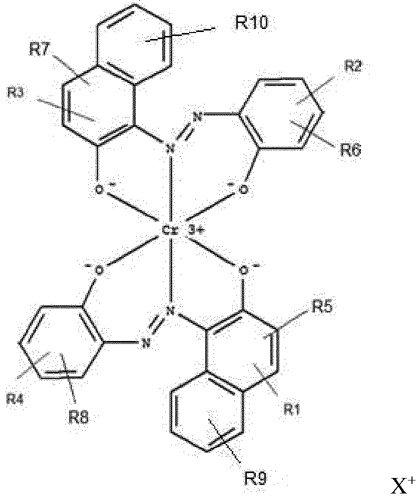 with
R1, R2, R3, R4 = same or different: H, alkyl residue with 1 to 15 carbon atoms, hydroxy alkyl residue with 1 to 15 carbon atoms, oligoglycol residue 1-10 glycol units, alkoxy residue with 1 to 15 carbon atoms
R5, R6, R7, R8, R9, R10 = same or different: H, NO₂, SO₃, F, Cl, Br, OH
X⁺ as counterion: H⁺, NH⁴⁺, NR⁴⁺, Na⁺, K⁺, Mg²⁺, Ca^{2+,}

6. Film according to any of the claims 1 to 5 **characterized in that** the radiation absorber is a compound having the CAS No 12237-22-8 or CAS 72812-34-1.

7. Laminated glass comprising two sheets of glass sandwiching an interlayer film comprising at least one first film according to any of claims 1 to 6 and at least one second film comprising a second polyvinyl acetal and 20 - 40 wght% of a second plasticizer and wherein the second film comprises no radiation absorber.

8. Laminated glass according to claim 7 **characterized in that** the first film has a smaller surface area as the second film.

9. Laminated glass according to any of claims 6 to 8 **characterized in that** the second film comprises at least one UV absorber.

10. Laminated glass according to any of claims 6 to 9 **characterized in that** the Laminated glass has a first surface facing towards sunlight a second surface facing away from sunlight and wherein the second film is positioned between the first surface and the first film.

11. Method for producing a film according to any of the claims 1 to 5 **characterized in that** by solving the radiation absorber and the first polyvinylacetal in an organic solvent, casting the mixture on a surface and evaporating the organic solvent to provide the film.

12. Method according to claim 11 **characterized in that** the surface is provided by a polymeric film.
